# EUROPEAN PATENT SPECIFICATION

(11) **EP 4 341 038 B1**
(45) Date of publication and mention of the grant of the patent: **14.01.2026**
(21) Application number: 22721476.4
(22) Date of filing: 20.04.2022
(51) Int. Cl.: B23Q 1/01, B23Q 1/62, B23Q 5/22

(54) **MACHINE TOOL FOR MACHINING SEMI-FINISHED ALUMINUM OR TITANIUM ALLOY PRODUCTS**
WERKZEUGMASCHINE ZUR BEARBEITUNG VON HALBZEUG AUS ALUMINIUM ODER TITANLEGIERUNGEN
MACHINE-OUTIL PERMETTANT L'USINAGE DE PRODUITS SEMI-FINIS EN ALLIAGE D'ALUMINIUM OU DE TITANE

(30) Priority: 20.05.2021 IT 202100013130; 23.06.2021 IT 202100016484
(43) Date of publication of application: 27.03.2024
(73) Proprietor: INNSE-BERARDI S.P.A. SOCIETA' UNIPERSONALE, 20134 Milano (IT)
(72) Inventor: MARCHETTI, Marcello, 20134 Milano (IT)
(74) Representative: Chimini, Francesco
(86) International application number: PCT/IB2022/053695
(87) International publication number: WO 2022/243763

(56) References cited:
- DE-U1- 202007 013 009
- JP-A- H1 199 424
- US-A1- 2018 099 367
- US-B2- 9 492 902

## Description

The present invention relates to the field of machine tools, and in particular to the technical field of large machine tools, such as a horizontal boring machine or a milling machine or a lathe. In particular, the present invention relates to a machine tool suitable to machine semi-finished aluminum alloy or titanium alloy products. DE 20 2007 013009 U1 shows an example of a machine tool according to the prior art.

Such machine tools are used to carry out mechanical machining on large semi-finished products for the aeronautical, aerospace and naval industries.

Due to the criticality of such industrial applications, extremely low machining tolerances are generally required. Machine tool manufacturers are therefore constantly engaged in the research and development of solutions which may guarantee these tolerances.

In the case of semi-finished titanium alloy machining, it is observed that, during the chip removal operations, the tool develops vibrations with a frequency of between 12 and 18 Hz. Considering that the resonant frequency of machine tools according to the prior art is between 14 and 16 Hz, it is clear to those skilled in the art that the machining of titanium alloys produces vibrations in the resonance range of the machines, which in fact prevent the tolerances required by the industrial applications for which the finished piece is intended from being obtained.

On the other hand, in the case of machining of semi-finished aluminum alloy products, compliance with dimensional tolerances requires very long production times. It is clear that, by increasing the rigidity of the machine and increasing the value of the first resonant frequency, the dynamic performance of the machine tool would improve and consequently the production times could be reduced without compromising the respect of the required tolerances.

Therefore, in order to comply with tolerances and/or improve dynamic performance, machine tools should be rigid enough to guarantee a resonant frequency of between 23 and 30 Hz.

So far, the efforts made by manufacturers have been aimed at increasing the rigidity of the machines. While it is possible to improve the stiffness through an increase in the stiffness of the machine structures, this technical prejudice, however justified by structural science, has not so far produced any satisfactory results.

The object of the present invention is to provide a large-sized machine tool capable of obviating the drawbacks mentioned above.

Such object is achieved with a machine tool for machining semi-finished aluminum alloy or titanium alloy products according to the appended claim 1. The claims dependent thereon identify additional advantageous embodiments of the invention.

The features and the advantages of the machine tool according to the present invention shall be made readily apparent from the following description of preferred embodiment examples thereof, provided purely by way of a non-limiting example, with reference to the accompanying figures, in which:
- Figure 1 is a perspective view of a machine tool in one embodiment;
- Figure 2 is a perspective view of the machine tool of Figure 1 according to a different angle;

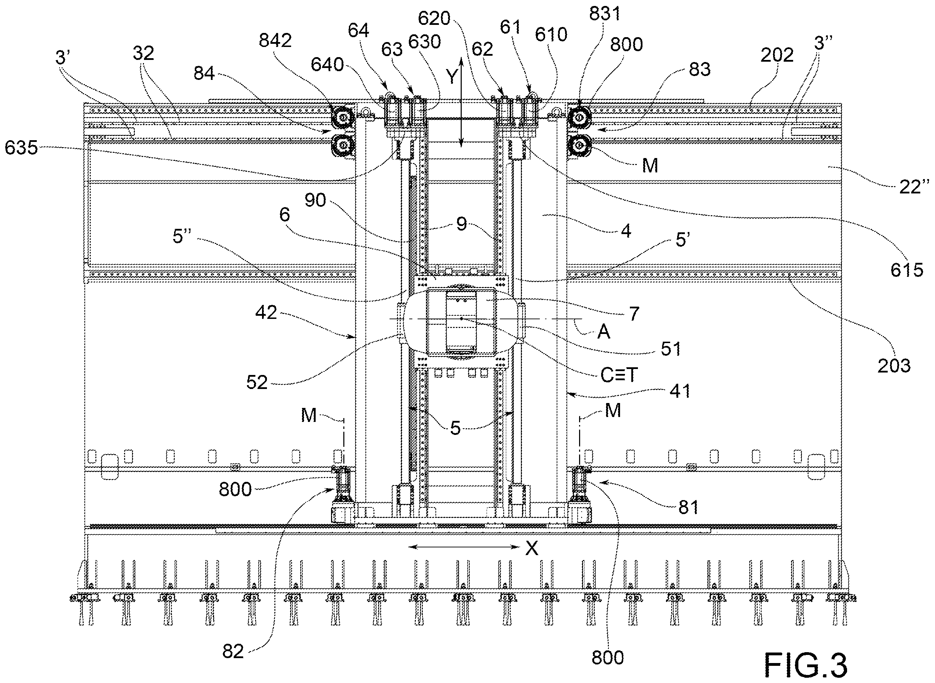

- Figure 3 is a front view of the machine tool of Figure 1;
- Figure 4 is a side view of the machine tool of Figure 1;
- Figure 5 is an enlarged view of the detail V in the square in Figure 4;
- Figure 6 is an enlarged view of the detail VI highlighted in Figure 1;
- Figure 7 is an enlarged view of the detail VII highlighted in Figure 1;
- Figure 8 is an enlarged view of the detail VIII in the square in Figure 4;

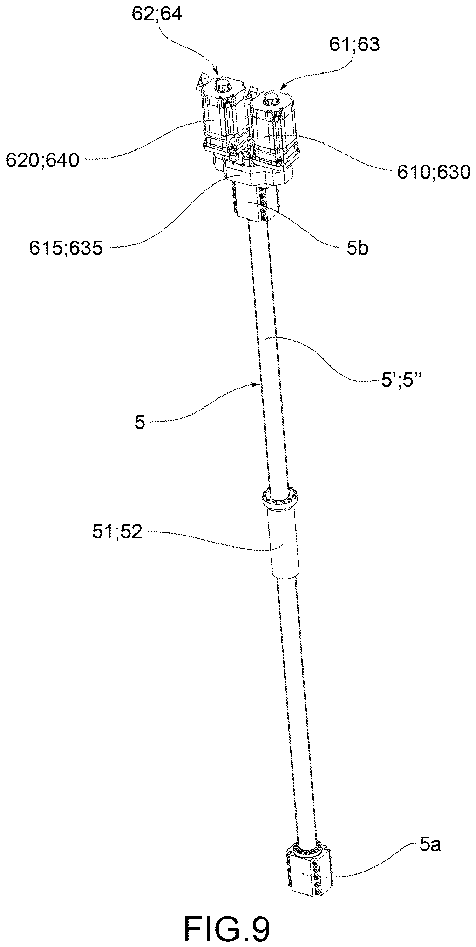

- Figure 9 is a perspective view of carriage translation means operable by a first pair of carriage moving ratio motors or by a second pair of carriage moving ratio motors;

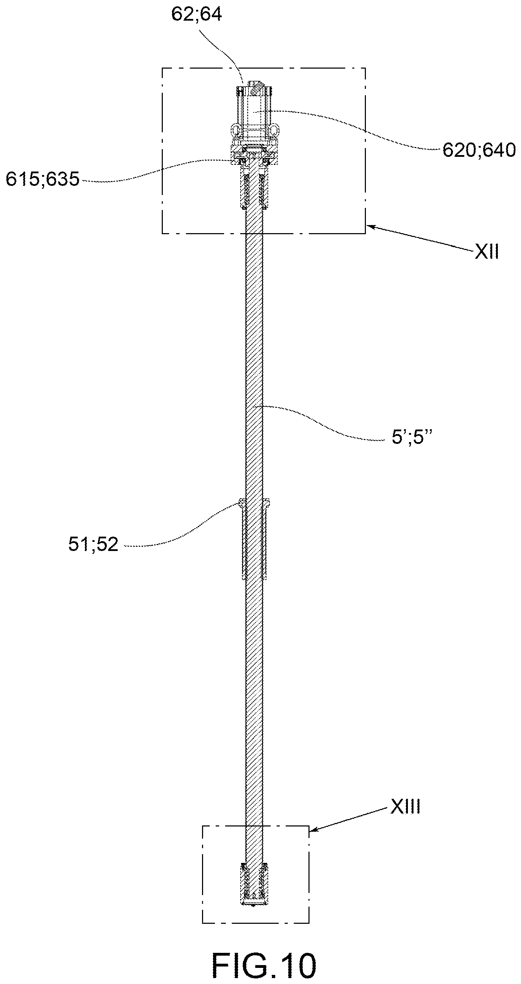

- Figure 10 is a sectional view of the carriage translation means shown in Figure 9;
- Figure 11 is a sectional view of an end portion of the carriage translation means operable by the first pair of carriage moving ratio motors or by the second pair of carriage moving ratio motors;
- Figure 12 is an enlarged view of the detail XII in the square in Figure 10, and
- Figure 13 is an enlarged view of the detail XIII in the square in Figure 10.

In the following description, elements common to the various embodiments represented in the drawings are indicated with the same reference numerals.

With reference to the figures of the accompanying drawings, the reference numeral 1 generally indicates a machine tool suitable to machine semi-finished aluminum alloy or titanium alloy products.

In a general embodiment, the machine tool 1 for machining semi-finished aluminum alloy or titanium alloy products is designed to rest on a horizontal reference plane G, for example the ground plane. Such machine tool 1 comprises a supporting structure 2, an upright 4, a carriage 6 and a working head 7.

The supporting structure 2 comprises a bench 20 and a rear support 22. The bench 20 has a main extension along a longitudinal direction X, while the rear support 22 extends both along the longitudinal direction X and along a vertical direction Y.

The bench and the rear support are rigidly connected to each other, i.e. engaged and made integral. For example, the bench 20 and the rear support 22 are connected in such a way that the supporting structure 2 has an "L" -shaped cross section, where such cross section is meant to be obtained along a plane orthogonal to the longitudinal direction X.

The supporting structure 2 is also provided with upright translation means 3 oriented according to the longitudinal direction X.

The upright 4 is connected to the supporting structure 2 by means of the upright translation means 3, so as to translate along the longitudinal direction X. Such upright 4 is further provided with carriage translation means 5 oriented according to the vertical direction Y.

The carriage 6 is connected to the upright 4 by means of the carriage translation means 5 so as to be translatable along the vertical direction Y.

The working head 7 is engaged with the carriage 6 and has a tool holder seat 70 suitable to house a tool for chip removal machining.

The machine tool 1 also comprises a first pair of carriage moving ratio motors 61, 62 and a second pair of carriage moving ratio motors 63, 64. Said first 61, 62 and second 63, 64 pair of carriage moving ratio motors are positioned aboard the upright 4 and are engaged with the carriage translation means 5.

In one embodiment, the carriage translation means 5 comprise a first ball screw 5' and a second ball screw 5".

According to an embodiment, the first ball screw 5' is actuated by the first pair of carriage moving ratio motors 61, 62 whereas the second ball screw 5" is actuated by the second pair of carriage moving ratio motors 63, 64.

Preferably, the first ball screw 5' is provided with a first nut 51 and the second ball screw 5" is provided with a second nut 52. In particular, these first 51 and second 52 nut are connected to opposite sides of the carriage 6, respectively.

For example, considering that the working head 7 is engaged to the carriage 6, the first 51 and the second 52 nut are connected to the carriage 6 so as to be arranged at the sides of the working head 7.

According to an embodiment, the first pair of carriage moving ratio motors 61, 62 comprises a first pair of electric motors 610, 620 and a first gearbox 615, where each electric motor of said first pair of electric motors is provided with a first moving shaft 611; 621 which engages the first gearbox 615. The second pair of carriage moving ratio motors 63, 64 in turn comprises a second pair of electric motors 630, 640 and a second gearbox 635, where each electric motor of said second pair of electric motors is provided with a second moving shaft 631; 641 which engages the second gearbox 635.

Preferably, the first pair of carriage moving ratio motors 61, 62 only comprises the first pair of electric motors 610, 620 and the first gearbox 615, while the second pair of carriage moving ratio motors 63, 64 only comprises the second pair of electric motors 630, 640 and the second gearbox 635.

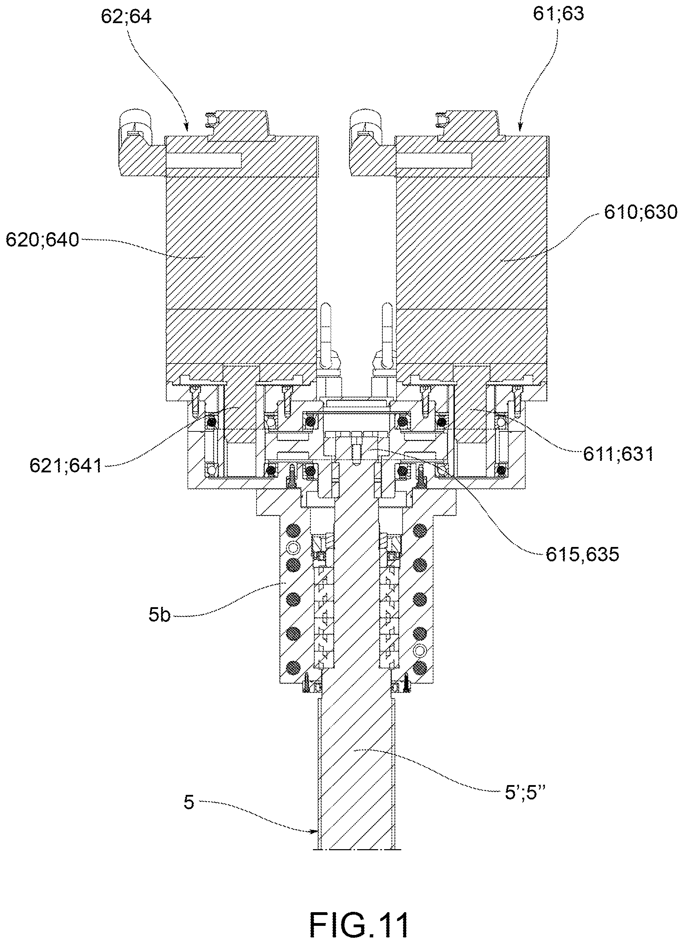

Figure 11 illustrates the kinematic chain of engagement between the first (or second) pair of electric motors and the first (or second) gearbox.

According to an embodiment, a main electric motor 630 belonging to the first 61, 62 or to the second pair of carriage moving ratio motors 63, 64 is a master whereas the other three electric motors 610, 620, 640 of the first 61, 62 and second pairs of carriage moving ratio motors 63, 64 are slaves.

Therefore, the actuation of the translation of the carriage 6 along the vertical direction Y is guided by a master-slave architecture.

Preferably, the upright 4 also comprises a pair of vertical guides 9 on which the carriage 6 slides. For example, such pair of vertical guides 9 is a pair of vertical sliding tracks, that is, oriented along the vertical direction Y.

In one embodiment, the machine tool 1 further comprises a vertical position transducer 90, e.g. an optical ruler, for detecting the position of the carriage 6 with respect to the upright 4.

Preferably, the vertical position transducer 90 is associated with a vertical guide of the pair of vertical guides 9.

According to an embodiment, the vertical position transducer 90 is positioned parallel to a vertical guide of the pair of vertical guides 9. Furthermore, such vertical position transducer 90 is arranged along the vertical direction Y, so as to be substantially vertically aligned with the main electric motor 630.

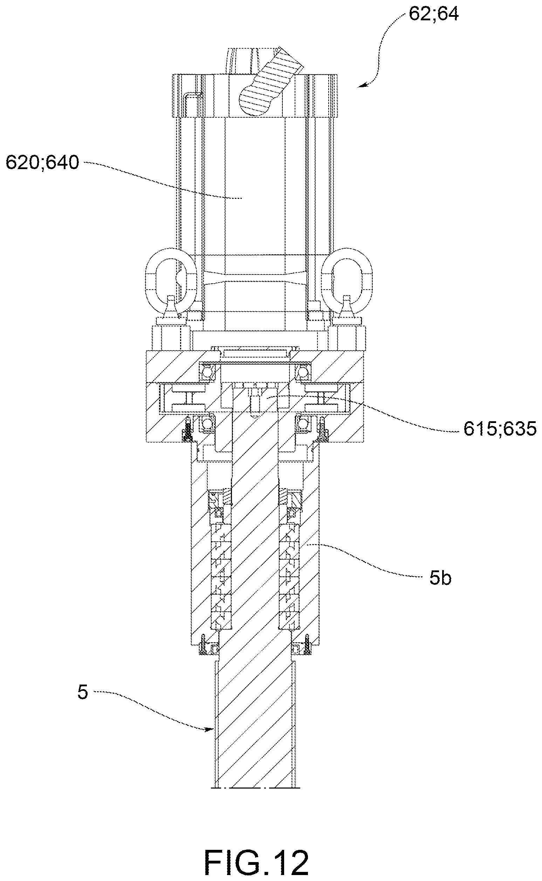

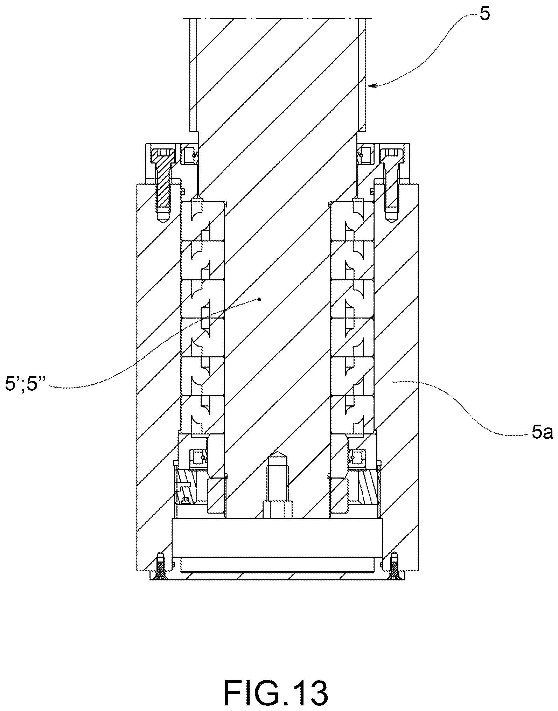

Preferably, both the first 5' and the second ball screw 5" comprise a lower support 5a and an upper support 5b. In this case, the lower support 5a is represented in Figure 13, while the upper support 5b is represented in Figure 12.

According to an embodiment, the machine tool 1 further comprises four pairs of ratio motors 81, 82, 83, 84 which are positioned aboard the upright 4 and engage with the upright translation means 3.

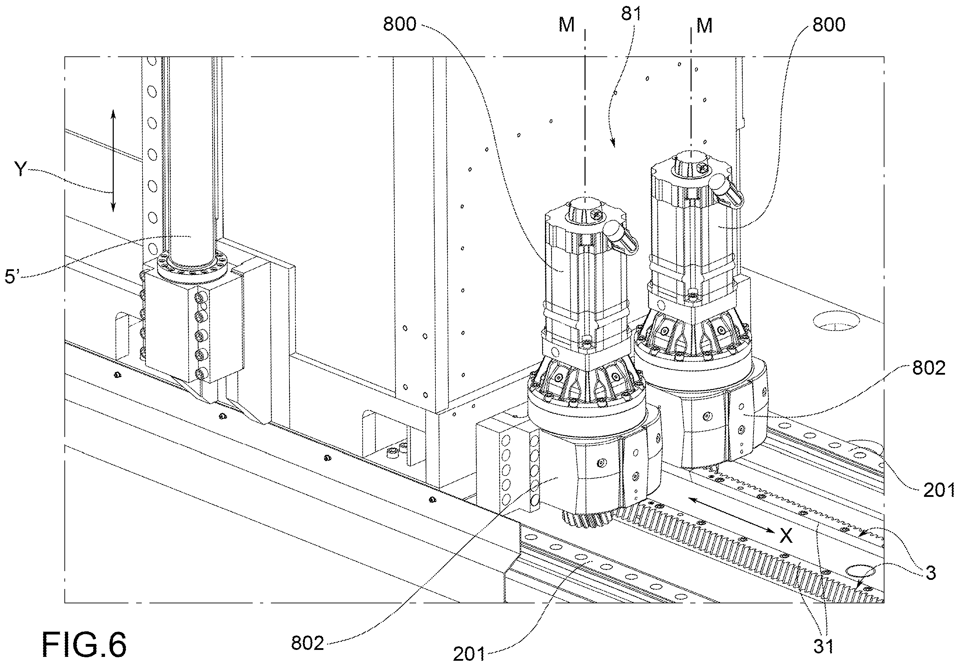

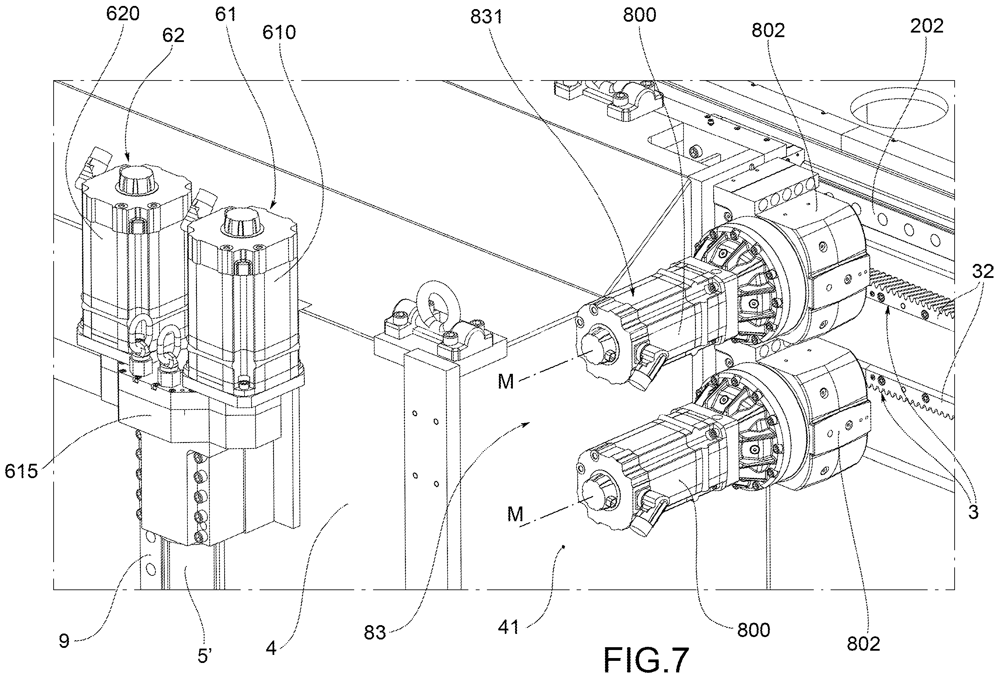

According to an embodiment shown in the accompanying figures 6 and 7, the upright translation means 3 comprise a first pair of upright translation members 31 fixed to the bench 20 and a second pair of upright translation members 32 fixed to the rear support 22.

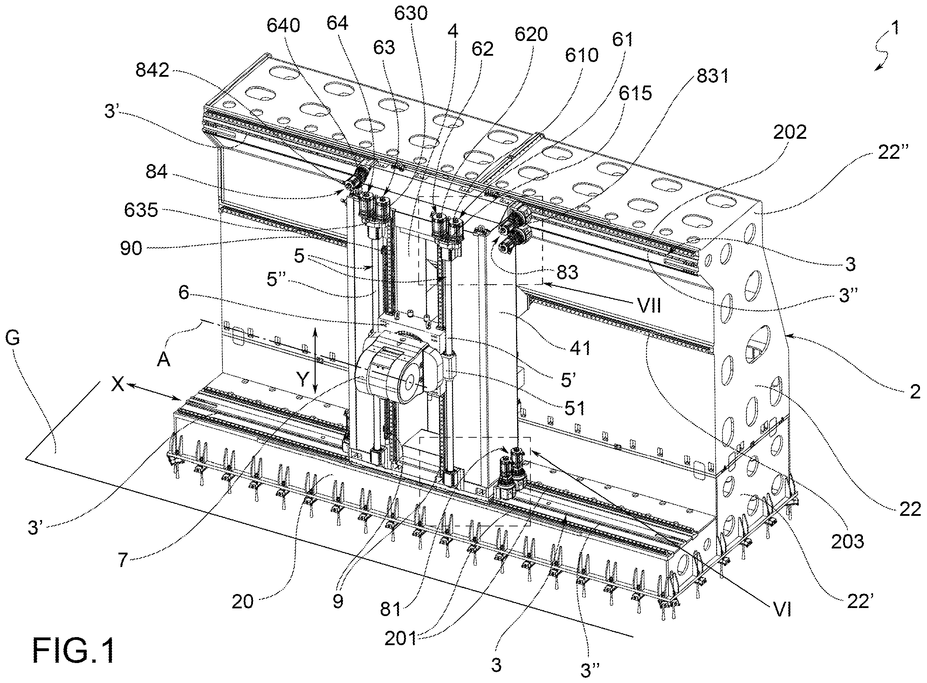

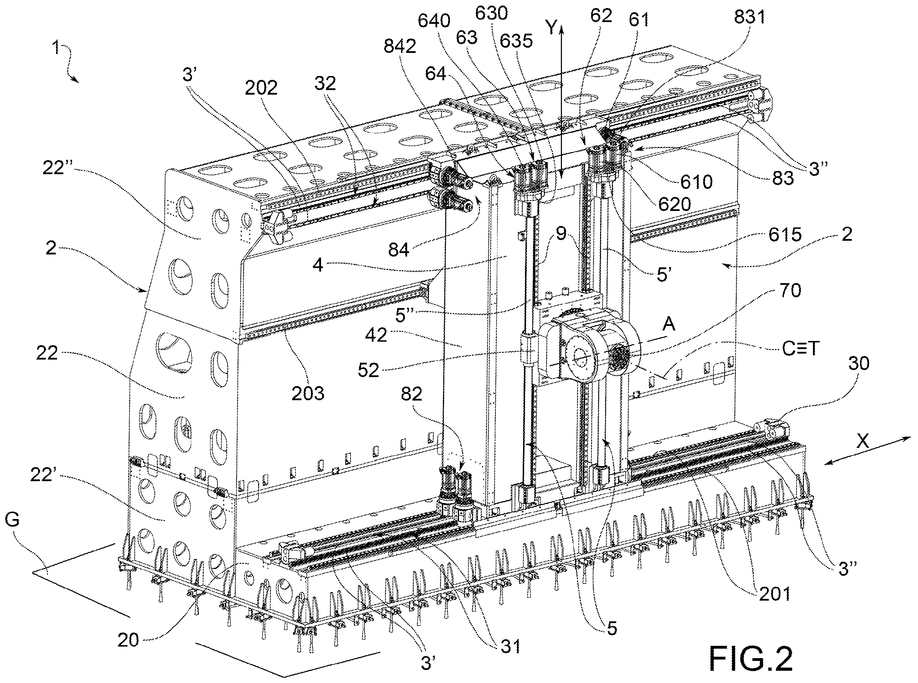

According to an embodiment illustrated in the accompanying Figures 1 and 2, a first pair of ratio motors 81 and a second pair of ratio motors 82 of the four pairs of ratio motors 81, 82, 83, 84 engage the first pair of upright translation members 31.

Instead, a third pair of ratio motors 83 and a fourth pair of ratio motors 84 of such four pairs of ratio motors 81, 82, 83, 84 engage the second pair of upright translation members 32.

In one embodiment, the first 81 and the third pair of ratio motors 83 are positioned on a first side 41 of the upright 4 whereas the second 82 and the fourth pair of ratio motors 84 are positioned on a second side 42 of the upright 4, opposite to the first side 41.

Said first 41 and second side 42 are lateral with respect to the position of the carriage translation means 5 on which the carriage 6 translates.

According to an embodiment, a first main ratio motor 831 belonging to the first 81 or to the third pair of ratio motors 83 is a master, while the remaining three ratio motors of the first and third pair of ratio motors are slaves. Furthermore, a second main ratio motor 842 belonging to the second 82 or to the fourth pair of ratio motors 84 is a master, while the remaining three ratio motors of the second and fourth pair of ratio motors are slaves.

Preferably, the first main ratio motor 831 belongs to the third pair of ratio motors 83 and is positioned in proximity to an upper end 22" of the rear support 22. The second main ratio motor 842 belongs to the fourth pair of ratio motors 84 and is positioned in proximity to the upper end 22".

In particular, both on the first side 41 and on the second side 42 of the upright 4 there is a master-slave architecture.

In one embodiment, each upright translation member of the first 31 and of the second pair of upright translation members 32 is a rack. Furthermore, each ratio motor of each of the four pairs of ratio motors 81, 82, 83, 84 comprises an electric upright translation motor 800 and a gearbox 802. The upright translation electric motor 800 has a motor axis M which is parallel to the vertical direction Y. The gearbox 802 has an inlet engaged with the upright translation electric motor 800 and an outlet engaged with the rack.

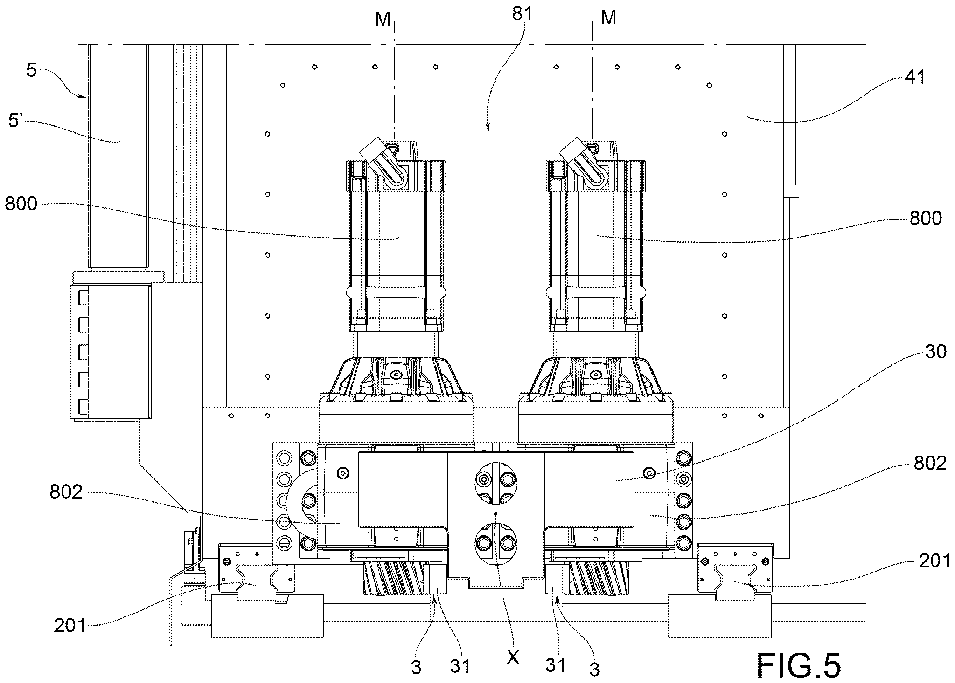

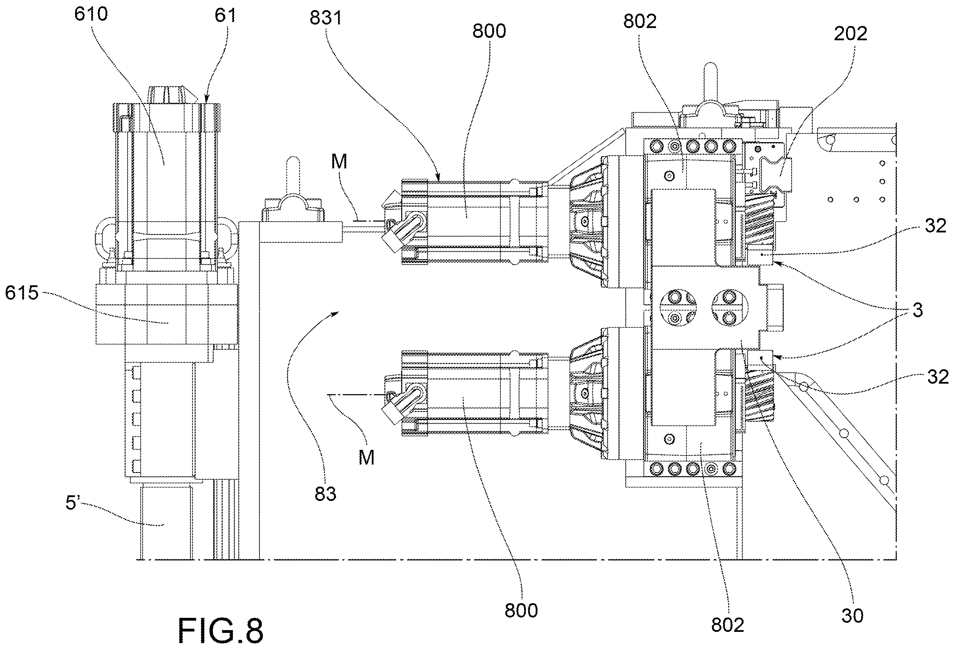

The accompanying Figures 5-8 illustrate the kinematic chain, where each upright translation member is a rack fixed to the supporting structure and where each ratio motor is fixed aboard the upright 4 and engages with the rack.

Preferably, the inlet and outlet of the gearbox 802 are coaxial to the motor axis M and the outlet comprises a toothed wheel which engages with the rack.

According to an embodiment, a GANTRY control is provided between each master and the respective slaves.

Therefore, a GANTRY control is also provided on both the first side 41 and the second side 42 of the upright 4. Furthermore, a GANTRY control is also provided between the first 61, 62 and the second pair of carriage moving ratio motors 63, 64.

The GANTRY control is implemented on master-slave architectures where, by means of MIMO (Multiple-Input and Multiple-Output) communication, the slave ratio motors follow the positions controlled by the master and send their feedback data to the master, so as to obtain a closed-loop control.

In one embodiment, the working head 7 is rotatable about a pitching axis A and about a rolling axis C.

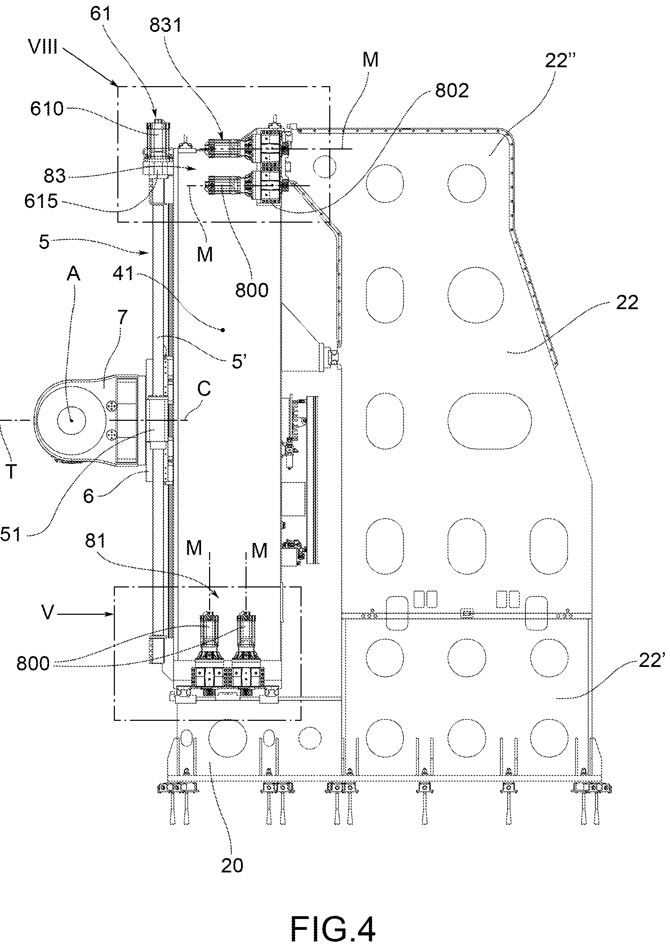

According to an embodiment illustrated in Figure 4, the tool holder seat 70 is rotatable about a tool axis T.

It should be noted that, by virtue of the type of machining to be carried out on the semi-finished product, the tool axis T may be collinear or incident with the rolling axis C.

In one embodiment, the bench 20 also comprises a first pair of guides 201 on which the upright 4 slides.

Furthermore, the rear support 22 extends between a lower end 22' connected to the bench 20, and an upper end 22" where, at such upper end, the second pair of upright translation members 32 and a second guide 202 on which the upright 4 slides are positioned.

In an embodiment shown in the accompanying Figures 1 and 2, at least a third guide 203 which is fixed to the rear support 22 and on which the upright 4 slides is positioned in between the upper end 22" and the lower end 22'.

Preferably, such third guide 203 is spaced vertically, i.e. along the vertical direction Y, from the second pair of upright translation members 32.

In particular, the first pair of guides 201, the second guide 202 and the third guide 203 are longitudinal sliding tracks, i.e. oriented along the longitudinal direction X.

According to an embodiment, both the first 31 and the second pair of upright translation members 32 extend along the longitudinal direction X between a first end 3' and a second end 3" opposite the first 3'. A position transducer 30, for example an optical ruler, is associated with such first 3' and second 3" ends.

Innovatively, the machine tool object of the present invention fulfills the intended purpose, as it achieves such a stiffness that the first resonance frequency is comprised in the range between 24 and 30 Hz.

Analytically, following software simulations for finite element analysis (FEA) of the machine tool object of the present invention, it has been calculated that the first resonance frequency is about 30 Hz. Considering that the value obtained is the result of a model that represents a simplification of reality, it was decided in favor of safety to consider 80% of the calculated value. Therefore, the first conservatively calculated resonance frequency is equal to 24 Hz, i.e. 80% of the result obtained through FEA simulations.

Advantageously, the machine tool object of the present invention is more rigid than the machine tools according to the prior art.

Contrary to the technical prejudice, which sought to improve the rigidity of the machines by only increasing the rigidity of the structures, in the present invention the degrees of constraint between the upright and the carriage translation means have been increased.

In addition, the degrees of constraint between the upright and the supporting structure have also been increased.

The increase in stiffness and in the value of the first resonant frequency were achieved when passing from the solution with only two ratio motors engaged with the carriage translation means, contemplated by the prior art, to the present invention in which a first and a second pair of carriage moving ratio motors engaged with the carriage translation means have been introduced. Therefore, the constraint between the upright and the carriage translation means has changed from two to four degrees.

Analytically, it has been observed that the increase in the degrees of constraint between the upright and the carriage translation means produces an increase in the resonance frequency such as to be able to machine the titanium alloys in absolute safety and in compliance with the required tolerances. In other words, it has been observed that by replacing each ratio motor of the prior art with a smaller pair of carriage moving ratio motors, the overall rigidity of the machine increases considerably and its dynamic performances improve.

According to an advantageous aspect, the machine tool object of the present invention is safe, since it operates on frequencies far from the resonant frequency of the machine itself.

According to a still further advantageous aspect, the machine tool object of the present invention has a lower manufacturing cost or comparable with the machine tools according to the prior art.

It is clear that those skilled in the art, in order to satisfy contingent needs, may make modifications to the machine tool described above, or replace elements with other functionally equivalent ones, without however departing from the scope of protection of the following claims. Each of the features described as belonging to a possible embodiment may be obtained independently in the other described embodiments, as long as the resulting machine tool belongs to the scope which is defined by the claims.

## Claims

1. A machine tool (1) suitable to machine semi-finished aluminum alloy or titanium alloy products and designed to rest on a horizontal reference plane (G), for example the ground plane, said machine tool comprising:
- a supporting structure (2) comprising a bench (20) having a main extension along a longitudinal direction (X), and a rear support (22) extending both along the longitudinal direction (X) and along a vertical direction (Y), wherein the bench and the rear support are rigidly connected to each other, and wherein the supporting structure (2) is provided with upright translation means (3) oriented according to the longitudinal direction (X);
- an upright (4) connected to the supporting structure (2) by means of the upright translation means (3) so as to translate along the longitudinal direction (X), said upright (4) being further provided with carriage translation means (5) oriented according to the vertical direction (Y);
- a carriage (6) connected to the upright (4) by means of the carriage translation means (5) so as to be translatable along the vertical direction (Y);
- a working head (7) engaged with the carriage (6) and having a tool holder seat (70) suitable to house a tool for chip removal machining,
**characterised in that** the machine tool further comprises a first pair of carriage moving ratio motors (61, 62) and a second pair of carriage moving ratio motors (63, 64), wherein said first (61, 62) and second pair of carriage moving ratio motors (63, 64) are positioned aboard the upright (4) and engaged to the carriage translation means (5).

2. A machine tool (1) according to the preceding claim, wherein the carriage translation means (5) comprise a first ball screw (5') and a second ball screw (5").

3. A machine tool (1) according to the preceding claim, wherein the first ball screw (5') is actuated by the first pair of carriage moving ratio motors (61, 62) and the second ball screw (5") is actuated by the second pair of carriage moving ratio motors (63, 64).

4. A machine tool (1) according to claim 2 or 3, wherein the first ball screw (5') is provided with a first nut (51) and the second ball screw (5") is provided with a second nut (52), wherein said first (51) and second (52) nuts are respectively connected to opposite sides of the carriage (6).

5. A machine tool (1) according to any one of the preceding claims, wherein the first pair of carriage moving ratio motors (61, 62) comprises a first pair of electric motors (610, 620) and a first gearbox (615), wherein each electric motor of said first pair of electric motors is provided with a first moving shaft (611; 621) which engages the first gearbox (615), and wherein the second pair of carriage moving ratio motors (63, 64) comprises a second pair of electric motors (630, 640) and a second gearbox (635), wherein each electric motor of said second pair of electric motors is provided with a second moving shaft (631; 641) which engages the second gearbox (635).

6. A machine tool (1) according to any one of the preceding claims, wherein a main electric motor (630) belonging to the first (61, 62) or to the second pair of carriage moving ratio motors (63, 64) is a master and the other three electric motors (610, 620, 640) of the first (61, 62) and second pairs of carriage moving ratio motors (63, 64) are slaves.

7. A machine tool (1) according to any one of the preceding claims, wherein the upright (4) further comprises a pair of vertical guides (9) on which the carriage (6) slides.

8. A machine tool (1) according to any one of the preceding claims, further comprising a vertical position transducer (90), e.g. an optical ruler, for detecting the position of the carriage (6) with respect to the upright (4).

9. A machine tool (1) according to any one of the preceding claims, further comprising four pairs of ratio motors (81, 82, 83, 84) positioned aboard the upright (4) and engaged with the upright translation means (3).

10. A machine tool (1) according to any one of the preceding claims, wherein the upright translation means (3) comprise a first pair of upright translation members (31) fixed to the bench (20) and a second pair of upright translation members (32) fixed to the rear support (22).

11. A machine tool (1) according to claims 9 and 10, wherein a first pair of ratio motors (81) and a second pair of ratio motors (82) of said four pairs of ratio motors (81, 82, 83, 84) engage the first pair of upright translation members (31) and wherein a third pair of ratio motors (83) and a fourth pair of ratio motors (84) of said four pairs of ratio motors (81, 82, 83, 84) engage the second pair of upright translation members (32).

12. A machine tool (1) according to the preceding claim, wherein the first (81) and the third pair of ratio motors (83) are positioned on a first side (41) of the upright (4) and wherein the second (82) and the fourth pair of ratio motors (84) are positioned on a second side (42) of the upright (4), opposite to the first side (41).

13. A machine tool (1) according to the preceding claim, wherein a first main ratio motor (831) belonging to the first (81) or third pair of ratio motors (83) is a master and the remaining three ratio motors of the first and third pair of ratio motors are slaves, and wherein a second main ratio motor (842) belonging to the second (82) or fourth pair of ratio motors (84) is a master and the remaining three ratio motors of the second and fourth pair of ratio motors are slaves.

14. A machine tool (1) according to claim 9 and any one of the claims from 10 to 13, wherein each upright translation member of the first (31) and second pair of upright translation members (32) is a rack, and wherein each ratio motor of the four pairs of ratio motors (81, 82, 83, 84) comprises an upright translation electric motor (800), having a motor axis (M) parallel to the vertical direction (Y) and a gearbox (802) having an inlet engaged with the upright translation electric motor (800), and an outlet engaged with the rack.

15. A machine tool (1) according to any one of the preceding claims, in combination with claim 6 or 13, comprising a GANTRY control between each master and the respective slaves.

16. A machine tool (1) according to any one of the preceding claims, wherein the working head (7) is rotatable about a pitching axis (A) and a rolling axis (C).

17. A machine tool (1) according to any one of the claims from 10 to 16, wherein the bench (20) further comprises a first pair of guides (201) on which the upright (4) slides, and wherein the rear support (22) extends between a lower end (22') connected to the bench (20), and an upper end (22") wherein, at said upper end, the second pair of upright translation members (32) and a second guide (202) on which the upright (4) slides are positioned.

18. A machine tool (1) according to the preceding claim, wherein at least a third guide (203) fixed to the rear support (22) and on which the upright (4) slides is positioned in between the upper end (22") and the lower end (22').

19. A machine tool (1) according to any one of the claims from 10 to 18, wherein both the first (31) and the second pair of upright translation members (32) extend along the longitudinal direction (X) between a first end (3') and a second end (3") opposite to the first end (3'), said first (3') and second end (3") being associated with a position transducer (30), for example an optical ruler.

## Patentansprüche

1. Werkzeugmaschine (1), die geeignet ist, Halbzeuge aus Aluminiumlegierungen oder Titanlegierungen zu bearbeiten und ausgelegt sind, auf einer horizontalen Bezugsebene (G), beispielsweise der Bodenebene, aufzuliegen, wobei die Werkzeugmaschine umfasst:
eine Tragstruktur (2) umfassend einen Tisch (20), aufweisend eine Haupterstreckung entlang einer Längsrichtung (X), und einen Rückträger (22), der sich sowohl entlang der Längsrichtung (X) als auch entlang einer Vertikalrichtung (Y) erstreckt, wobei der Tisch und der Rückträger starr miteinander verbunden sind, und wobei die Tragstruktur (2) mit Ständer-Verschiebungselementen (3) versehen ist, die nach der Längsrichtung (X) ausgerichtet sind;
- einen Ständer (4), der mittels der Ständer-Verschiebungselemente (3) mit der Tragstruktur (2) verbunden ist, sodass er sich entlang der Längsrichtung (X) verschieben kann, wobei der Ständer (4) ferner mit Wagen-Verschiebungselementen (5) versehen ist, die nach der Vertikalrichtung (Y) ausgerichtet sind;
- einen Wagen (6), der mittels der Wagen-Verschiebungselemente (5) mit dem Ständer (4) verbunden ist, sodass er entlang der Vertikalrichtung (Y) verschiebbar ist;
- einen Arbeitskopf (7), der mit dem Wagen (6) in Eingriff steht und einen Werkzeugträgersitz (7 O) aufweist, der geeignet ist, ein Werkzeug zur spanenden Bearbeitung aufzunehmen,
**dadurch gekennzeichnet, dass**
die Werkzeugmaschine ferner ein erstes Paar von Wagenbewegungsmotoren (61, 62) und ein zweites Paar von Wagenbewegungsmotoren (63, 64) umfasst, wobei das erste (61, 62) und die zweite Paar von Wagenbewegungsmotoren (63, 64) an dem Ständer (4) positioniert sind und mit den Wagen-Verschiebungselementen (5) in Eingriff stehen.

2. Werkzeugmaschine (1) nach dem vorhergehenden Anspruch, wobei die Wagen-Verschiebungselemente (5) eine erste Kugelumlaufspindel (5') und eine zweite Kugelumlaufspindel (5") umfassen.

3. Werkzeugmaschine (1) nach dem vorhergehenden Anspruch, wobei die erste Kugelumlaufspindel (5') durch das erste Paar von Wagenbewegungsmotoren (61, 62) angetrieben wird und die zweite Kugelumlaufspindel (5") durch das zweite Paar von Wagenbewegungsmotoren (63, 64) angetrieben wird.

4. Werkzeugmaschine (1) nach Anspruch 2 oder 3, wobei die erste Kugelumlaufspindel (5') mit einer ersten Mutter (51) versehen ist und die zweite Kugelumlaufspindel (5") mit einer zweiten Mutter (52) versehen ist, wobei die erste (51) und die zweite (52) Mutter jeweils mit gegenüberliegenden Seiten des Wagens (6) verbunden sind.

5. Werkzeugmaschine (1) nach einem der vorhergehenden Ansprüche, wobei das erste Paar von Wagenbewegungsmotoren (61, 62) ein erstes Paar von Elektromotoren (610, 620) und ein erstes Getriebe (615) umfasst, wobei jeder Elektromotor des ersten Paars von Elektromotoren mit einer beweglichen Welle (611; 621) versehen ist, die mit dem ersten Getriebe (615) in Eingriff steht, und wobei das zweite Paar von Wagenbewegungsmotoren (63, 64) ein zweites Paar von Elektromotoren (630, 64 O) und ein zweites Getriebe (635) umfasst, wobei jeder Elektromotor des zweiten Paars von Elektromotoren mit einer zweiten beweglichen Welle (631; 641) versehen ist, die mit dem zweiten Getriebe (635) in Eingriff steht.

6. Werkzeugmaschine (1) nach einem der vorhergehenden Ansprüche, wobei ein Hauptelektromotor (630), der zu dem ersten (61, 62) oder zu dem zweiten Paar von Wagenbewegungsmotoren (63, 64) gehört, ein Master ist und die übrigen drei Elektromotoren (61 O, 62 O, 64 O) der ersten (61, 62) und zweiten Paare von Wagenbewegungsmotoren (63, 64) Slave sind.

7. Werkzeugmaschine (1) nach einem der vorhergehenden Ansprüche, wobei der Ständer (4) ferner ein Paar vertikaler Führungen (9) aufweist, auf denen der Wagen (6) gleitet.

8. Werkzeugmaschine (1) nach einem der vorhergehenden Ansprüche, die ferner einen vertikalen Stellungsmessgeber (90) umfasst, z. B. einen optischen Messschieber zur Erkennung der Position des Wagens (6) in Bezug auf den Ständer (4).

9. Werkzeugmaschine (1) nach einem der vorhergehenden Ansprüche, die ferner vier Paare von Motoren (81, 82, 83, 84) umfasst, die an dem Ständer (4) positioniert sind und mit den Ständer-Verschiebungselementen (3) in Eingriff stehen.

10. Werkzeugmaschine (1) nach einem der vorhergehenden Ansprüche, wobei die Ständer-Verschiebungselemente (3) ein erstes Paar von Ständer-Verschiebungselementen (31), das an dem Tisch (20) befestigt wird, und ein zweites Paar von Ständer-Verschiebungselementen (32) umfassen, das an dem Rückträger (22) befestigt wird.

11. Werkzeugmaschine (1) nach den Ansprüchen 9 und 10, wobei ein erstes Paar von Motoren (81) und ein zweites Paar von Motoren (82) der vier Paare von Motoren (81, 82, 83, 84) mit dem ersten Paar von Ständer-Verschiebungselementen (31) in Eingriff stehen und wobei ein drittes Paar von Motoren (83) und ein viertes Paar von Motoren (84) der vier Paare von Motoren (81, 82, 83, 84) mit dem zweiten Paar von Ständer-Verschiebungselementen (32) in Eingriff stehen.

12. Werkzeugmaschine (1) nach dem vorhergehenden Anspruch, wobei das erste (81) und das dritte Paar von Motoren (83) auf einer ersten Seite (41) des Ständers (4) positioniert sind und wobei das zweite (82) und das vierte Paar von Motoren (84) auf einer zweiten Seite (42) des Ständers positioniert sind, die der ersten Seite (41) gegenüberliegt.

13. Werkzeugmaschine (1) nach dem vorhergehenden Anspruch, wobei ein erster Hauptmotor (831), der zu dem ersten (81) oder zu dem dritten Paar von Motoren (83) gehört ein Master ist und die übrigen drei Motoren des ersten und des dritten Paars von Motoren Slave sind, und wobei ein zweiter Hauptmotor (842), der zu dem zweiten (82) oder zu dem vierten Paar von Motoren (84) gehört, ein Master ist und die übrigen drei Motoren des zweiten und des vierten Paars von Motoren Slave sind.

14. Werkzeugmaschine (1) nach Anspruch 9 und einem der Ansprüche von 10 bis 13, wobei jedes Ständer-Verschiebungselement des ersten (31) und des zweiten Paars von Ständer-Verschiebungselementen (32) eine Zahnstange ist, und wobei jeder Motor des vierten Paars von Motoren (81, 82, 83, 84) einen Ständerverschiebung-Elektromotor (800) umfasst, der eine Motorachse (M) aufweist, die sich parallel zu der Vertikalrichtung (Y) erstreckt und eine Getriebe (802) aufweisend einen Eingang, der mit dem Ständerverschiebung-Elektromotor (800) in Eingriff steht, und einen Ausgang, der mit der Zahnstange in Eingriff steht.

15. Werkzeugmaschine (1) nach einem der vorhergehenden Ansprüche, in Kombination mit Anspruch 6 oder 13, umfassend eine GANTRY-Steuerung zwischen jedem Master und dem jeweiligen Slave.

16. Werkzeugmaschine (1) nach einem der vorhergehenden Ansprüche, wobei der Arbeitskopf (7) um eine Schwenkachse (A) und eine Rollenachse (C) drehbar ist.

17. Werkzeugmaschine (1) nach einem der Ansprüche von 10 bis 16, wobei der Tisch (20) ferner ein erstes Paar von Führungen (201) umfasst, auf denen der Ständer (4) gleitet, und wobei der Rückträger (22) sich zwischen einem unteren Ende (22'), das mit dem Tisch (20) verbunden ist und einem oberen Ende (22") erstreckt, wobei das zweite Paar von Ständer-Verschiebungselementen (32) und eine zweite Führung (202) , auf der der Ständer (4) gleitet, an dem oberen Ende positioniert sind

18. Werkzeugmaschine (1) nach dem vorhergehenden Anspruch, wobei mindestens eine dritte Führung (203), die an dem Rückträger (22) befestigt wird und auf der der Ständer (4) gleitet, zwischen dem oberen Ende (22") und dem unteren Ende (22') positioniert ist.

19. Werkzeugmaschine (1) nach einem der Ansprüche von 10 bis 18, wobei sowohl das erste (31) als auch das zweite Paar von Ständer-Verschiebungselementen (32) sich entlang einer Längsrichtung (X) zwischen einem ersten Ende (3') und einem zweiten Ende (3"), das dem ersten Ende (3') gegenüberliegt, erstrecken, wobei das erste (3') und das zweite Ende (3") einem Positionsmessgeber (30), z.B. einem optischen Messschieber zugeordnet sind.

## Revendications

1. Une machine-outil (1) apte à usiner des produits semi-finis en alliage d'aluminium ou en alliage de titane et conçue pour reposer sur un plan de référence horizontal (G), par exemple le plan du sol, ladite machine-outil comprenant :
- une structure porteuse (2) comprenant un banc (20) ayant une extension principale selon une direction longitudinale (X), et un support arrière (22) s'étendant à la fois le long de la direction longitudinale (X) et le long d'une direction verticale (Y), dans laquelle le banc et le support arrière sont rigidement reliés l'un à l'autre, et dans laquelle la structure porteuse (2) est pourvue de moyens de translation du support vertical (3) orientés selon la direction longitudinale (X) ;
- un support vertical (4) relié à la structure porteuse (2) au moyen des moyens de translation du support vertical (3) de sorte à se translater selon la direction longitudinale (X), ledit support vertical (4) étant en outre pourvu de moyens de translation du chariot (5) orientés selon la direction verticale (Y) ;
- un chariot (6) relié au support vertical (4) au moyen des moyens de translation du chariot (5) de sorte à être translatable selon la direction verticale (Y) ;
- une tête de travail (7) engagée avec le chariot (6) et présentant un siège porte-outil (70) apte à recevoir un outil pour l'usinage par enlèvement de copeaux,
**caractérisée en ce que**
la machine-outil comporte en outre une première paire de moteurs à engrenages d'entraînement du chariot (61, 62) et une seconde paire de moteurs à engrenages d'entraînement du chariot (63, 64), dans laquelle ladite première (61, 62) et seconde paire de moteurs à engrenages d'entraînement du chariot (63, 64) sont disposées à bord du support vertical (4) et engagées sur les moyens de translation du chariot (5).

2. Une machine-outil (1) selon la revendication précédente, dans laquelle les moyens de translation du chariot (5) comprennent une première vis à billes (5') et une seconde vis à billes (5").

3. Une machine-outil (1) selon la revendication précédente, dans laquelle la première vis à billes (5') est actionnée par la première paire de moteurs à engrenages d'entraînement du chariot (61, 62) et la seconde vis à billes (5") est actionnée par la seconde paire de moteurs à engrenages d'entraînement du chariot (63, 64).

4. Une machine-outil (1) selon la revendication 2 ou 3, dans laquelle la première vis à billes (5') est munie d'un premier écrou (51) et la seconde vis à billes (5") est munie d'un second écrou (52), dans laquelle ledit premier écrous (51) et ledit second écrous (52) sont respectivement reliés à côtés opposés du chariot (6).

5. Une machine-outil (1) selon l'une quelconque des revendications précédentes, dans laquelle la première paire de moteurs à engrenages d'entraînement du chariot (61, 62) comprend une première paire de moteurs électriques (610, 620) et un premier réducteur (615), dans laquelle chaque moteur électrique de ladite première paire de moteurs électriques est pourvu d'un premier arbre mobile (611; 621) qui engrène le premier réducteur (615), et dans laquelle la seconde paire de moteurs à engrenages d'entraînement du chariot (63, 64) comprend une seconde paire de moteurs électriques (630, 64 O) et un second réducteur (635), dans laquelle chaque moteur électrique de ladite seconde paire de moteurs électriques est pourvu d'un second arbre mobile (631; 641) qui engrène le second réducteur (635).

6. Une machine-outil (1) selon l'une quelconque des revendications précédentes, dans laquelle un moteur électrique principal (630) appartenant à la première (61, 62) ou à la seconde paire de moteurs à engrenages d'entraînement du chariot (63, 64) est un maître et les trois autres moteurs électriques (610, 620, 640) des première (61, 62) et seconde paires de moteurs à engrenages d'entraînement du chariot (63, 64) sont des esclaves.

7. Une machine-outil (1) selon l'une quelconque des revendications précédentes, dans laquelle le support vertical (4) comprend en outre une paire de guidages verticaux (9) sur lesquels le chariot (6) coulisse.

8. Une machine-outil (1) selon l'une quelconque des revendications précédentes, comprenant en outre un transducteur de position verticale (90), par exemple une règle optique, pour détecter la position du chariot (6) par rapport au support vertical (4).

9. Une machine-outil (1) selon l'une quelconque des revendications précédentes, comprenant en outre quatre paires de moteurs à engrenages d'entraînement (81, 82, 83, 84) positionnées à bord du support vertical (4) et engagées avec les moyens de translation du support vertical (3).

10. Une machine-outil (1) selon l'une quelconque des revendications précédentes, dans laquelle les moyens de translation du support vertical (3) comprennent une première paire d'éléments de translation du support vertical (31) fixés au banc (20) et une seconde paire d'éléments de translation du support vertical (32) fixés au support arrière (22).

11. Une machine-outil (1) selon les revendications 9 et 10 dans laquelle une première paire de moteurs à engrenages d'entraînement (81) et une seconde paire de moteurs à engrenages d'entraînement (82) desdites quatre paires de moteurs à engrenages d'entraînement (81, 82, 83, 84) engrènent la première paire d'éléments de translation support vertical (31) et dans laquelle une troisième paire de moteurs à engrenages d'entraînement (83) et une quatrième paire de moteurs à engrenages d'entraînement (84) desdites quatre paires de moteurs à engrenages d'entraînement (81, 82, 83, 84) engrènent la seconde paire d'éléments de translation du support vertical (32).

12. Une machine-outil (1) selon la revendication précédente, dans laquelle la première paire (81) et la troisième paire de moteurs à engrenages d'entraînement (83) sont positionnées sur un premier côté (41) du support vertical (4) et dans laquelle la seconde paire (82) et la quatrième paire de moteurs à engrenages d'entraînement (84) sont positionnées sur un second côté (42) du support vertical (4), opposé au premier côté (41).

13. Une machine-outil (1) selon la revendication précédente, dans laquelle un premier moteur d'entraînement principal (831) appartenant à la première paire (81) ou à la troisième paire de moteurs à engrenages d'entraînement (83) est un maître et les trois moteurs à engrenages d'entraînement restants de la première paire et de la troisième paire de moteurs à engrenages d'entraînement sont des esclaves, et dans laquelle un second moteur d'entraînement principal (842) appartenant à la seconde paire (82) ou à la quatrième paire de moteurs à engrenages d'entraînement (84) est un maître et les trois moteurs à engrenages d'entraînement restants de la seconde paire et la quatrième paires de moteurs à engrenages d'entraînement sont des esclaves.

14. Une machine-outil (1) selon la revendication 9 ou l'une des revendications de 10 à 13, dans laquelle chaque élément de translation du support vertical de la première paire (31) et de la seconde paire d'éléments de translation du support vertical (32) est un crémaillère, et dans laquelle chaque moteur d'entraînement des quatre paires de moteurs à engrenages d'entraînement (81, 82, 83, 84) comprend un moteur électrique de translation du support vertical (800), ayant un axe moteur (M) parallèle à la direction verticale (Y) et un réducteur (802) ayant une entrée engagée avec le moteur électrique de translation du support vertical (800), et une sortie engagée avec la crémaillère.

15. Une machine-outil (1) selon l'une quelconque des revendications précédentes, en combinaison avec la revendication 6 ou 13, comprenant un contrôle GANTRY entre chaque maître et les esclaves respectifs.

16. Une machine-outil (1) selon l'une quelconque des revendications précédentes, dans laquelle la tête de travail (7) est orientable autour d'un axe de tangage (A) et d'un axe de roulis (C).

17. Une machine-outil (1) selon l'une quelconque des revendications de 10 à 16, dans laquelle le banc (20) comprend en outre une première paire de guidages (201) sur lesquels le support vertical (4) coulisse, et dans laquelle le support arrière (22) s'étend entre une extrémité inférieure (22') connectée au banc (20), et une extrémité supérieure (22") dans laquelle, au niveau de ladite extrémité supérieure, la seconde paire d'éléments de translation du support vertical (32) et un second guidage (202) sur lequel le support vertical (4) coulisse sont positionnés.

18. Une machine-outil (1) selon la revendication précédente, dans laquelle au moins un troisième guidage (203) fixé au support arrière (22) et sur lequel le support vertical (4) coulisse est positionné entre l'extrémité supérieure (22") et l'extrémité inférieure (22').

19. Une machine-outil (1) selon l'une quelconque des revendications de 10 à 18, dans laquelle tant la première paire (31) que la seconde paire d'éléments de translation du support vertical (32) s'étendent le long de la direction longitudinale (X) entre une première extrémité (3') et une seconde extrémité (3") opposée à la première extrémité (3'), ladite première extrémité (3') et ladite seconde extrémité étant associées à un transducteur de position (30), par exemple une règle optique.
